# EUROPÄISCHE PATENTSCHRIFT

(11) **EP 3 516 349 B1**
(45) Veröffentlichungstag und Bekanntmachung des Hinweises auf die Patenterteilung: **20.07.2022**
(21) Anmeldenummer: 17731550.4
(22) Anmeldetag: 20.06.2017
(51) Int. Cl.: G01G 19/393, G01G 19/387

(54) **WÄGEVORRICHTUNG UND VERFAHREN ZUM WIEGEN EINES PRODUKTS**
WEIGHING APPARATUS AND METHOD FOR WEIGHING A PRODUCT
DISPOSITIF DE PESAGE ET PROCÉDÉ PERMETTANT DE PESER UN PRODUIT

(30) Priorität: 23.09.2016 DE 102016117966
(43) Veröffentlichungstag der Anmeldung: 31.07.2019
(73) Patentinhaber: Espera-Werke GmbH, 47058 Duisburg (DE)
(72) Erfinder: POLOMSKI, Jürgen, 47269 Duisburg (DE)
(74) Vertreter: Gottschald Patentanwälte Partnerschaft mbB
(86) Internationale Anmeldenummer: PCT/EP2017/065079
(87) Internationale Veröffentlichungsnummer: WO 2018/054563

(56) Entgegenhaltungen:
- EP-A1- 2 669 643
- EP-A2- 2 574 887
- WO-A1-2004/102135
- DE-A1-102010 005 931
- DE-C1- 3 206 061

## Beschreibung

Die vorliegende Erfindung betrifft eine Wägevorrichtung, insbesondere Kontrollwaage oder Preisauszeichnungsvorrichtung, mit einer Waage zum Wiegen eines Produkts in einem Wägeabschnitt, mit einer Fördereinrichtung zum Transport des Produkts entlang eines Förderbereichs von einer Startposition über den Wägeabschnitt zu einer Zielposition.

Ferner betrifft die Erfindung ein Verfahren zum Wiegen eines Produkts, insbesondere unter Verwendung einer wie zuvor definierten Wägevorrichtung.

Aus dem Stand der Technik sind unterschiedliche Wägevorrichtungen bekannt, die beispielsweise als Preisauszeichnungsvorrichtung oder Kontrollwaage (checkweigher) Verwendung finden. Wägevorrichtungen dieser Art weisen eine Fördereinrichtung, häufig ein ein- oder mehrteiliges Förderband, auf, womit Produkte zwischen einer Startposition und einer Zielposition transportiert werden können. Zwischen der Startposition und der Zielposition wird das jeweilige Produkt dann gewogen, bei einem Preisauszeichner zur Ermittlung des Gewichts zum Zwecke der späteren Etikettierung oder bei einer Kontrollwaage zur Kontrolle des Gewichts.

Die Waage befindet sich in einem Abschnitt des Förderbands, über den das Produkt mit einer vorbestimmten Transportgeschwindigkeit hinweggefördert wird. Das Wiegen des Produkts erfolgt also bei den besagten Wägevorrichtungen nicht im Stillstand, das heißt statisch, sondern während seiner Bewegung, das heißt dynamisch.

Ein bekanntes Problem bei Wägevorrichtungen dieser Art ist, dass sich die Messwerte ein und desselben Produkts beim statischen Wiegen von denen beim dynamischen Wiegen unterscheiden (statisch-dynamischer Versatz). Die Messunterschiede ergeben dukts in Schwerkraftrichtung verursacht. Auch Unebenheiten im Transportband können eine Beschleunigung des Produkts in Schwerkraftrichtung zur Folge haben. Folglich weichen die Messwerte bei einem statischen Wiegen immer um einen bestimmten Wert von denen bei einem dynamischen Wiegen ab.

Um den statisch-dynamischen Versatz bei einer Wägevorrichtung der eingangs genannten Art zu kompensieren, ist es bekannt, einen Korrekturwert dadurch zu ermitteln, dass ein Prüfgut zunächst statisch gewogen und anschließend mehrfach hintereinander dynamisch gewogen wird. Aus den Messwerten der mehrfachen dynamischen Wägevorgänge wird dann ein Mittelwert gebildet. Dieser Mittelwert wird dann von dem mit demselben Prüfgut ermittelten Messwert aus dem statischen Wägevorgang in Abzug gebracht, woraus sich ein Korrekturwert ergibt. Werden nun im regulären Betrieb Produkte auf der Wägevorrichtung dynamisch gewogen, wird dem jeweiligen Messwert von einer Steuereinrichtung automatisch der zuvor ermittelte Korrekturwert hinzuaddiert und dadurch das tatsächliche Gewicht des Produkts relativ genau ermittelt. Eine Wägevorrichtung, die nach dem vorangehend beschriebenen Funktionsprinzip arbeitet, ist beispielsweise aus der DE 32 06 061 C1 bekannt.

Aus der EP 2 669 643 A1 ist eine Wägevorrichtung bekannt, bei der das Produkt auf einer Waage abgelegt, gewogen und anschließend entweder zu einer Zielposition oder zu einer Ausschussposition verfahren wird.

Ein Nachteil beim Stand der Technik ist allerdings, dass bei der zuvor beschriebenen Kalibrierung zur Kompensierung des statisch-dynamischen Versatzes eine dynamische Messung Schwankungen unterliegen kann, weshalb diese mehrfach ausgeführt werden muss, um einen Mittelwert zu ermitteln. Dazu muss das Prüfgut allerdings nach jedem dynamischen Wägevorgang von einer Bedienperson von Hand vom Transportband abgenommen und anschließend wieder in der Startposition auf das Transportband aufgesetzt werden. Dies ist relativ umständlich, relativ zeitaufwendig, insbesondere wenn eine Vielzahl von dynamischen Messungen durchgeführt werden soll, und verlangt immer die Anwesenheit und Aufmerksamkeit einer Bedienperson.

Es ist daher eine Aufgabe der vorliegenden Erfindung, eine Wägevorrichtung der eingangs genannten Art derart weiterzuentwickeln, dass eine Kalibrierung zur Kompensation eines statisch-dynamischen Versatzes vereinfacht wird. Auch ist es die Aufgabe der Erfindung, ein entsprechendes Verfahren zum Wiegen eines Produkts anzugeben.

Die zuvor hergeleitete und aufgezeigte Aufgabe wird gemäß einer ersten Lehre der vorliegenden Erfindung bei einer Wägevorrichtung, insbesondere Preisauszeichnungsvorrichtung oder Kontrollwaage (checkweigher),
- mit einer Waage zum Wiegen eines Produkts in einem Wägeabschnitt,
- mit einer Fördereinrichtung zum Transport des Produkts, wobei das Produkt insbesondere auf der Fördereinrichtung aufliegt, entlang eines Förderbereichs (d.h. Transportbereichs) von einer Startposition über den Wägeabschnitt zu einer Zielposition,
dadurch gelöst, dass die Wägevorrichtung ferner eine Steuereinrichtung aufweist, die derart konfiguriert ist, dass die Fördereinrichtung während ihres Betriebs in eine Richtung von der Startposition zu der Zielposition automatisch angehalten und dann automatisch in eine Richtung von der Zielposition zu der Startposition betrieben werden kann. Mit dem Förderbereich ist der Bereich der Fördereinrichtung gemeint, die für den Transport eines Produkts zur Verfügung steht, in dem also ein Produkt transportiert werden kann.

Indem erfindungsgemäß eine Steuereinrichtung vorgesehen ist, die die sich bewegende Fördereinrichtung automatisch anhalten und dann automatisch die Bewegungsrichtung umkehren kann, wird ermöglicht, dass ein auf die Fördereinrichtung aufgesetztes Produkt (darunter wird auch ein Prüfgut verstanden) zunächst von der Startposition in Richtung der Zielposition gefördert werden kann, in einem Bereich zwischen der Startposition und der Zielposition gewogen werden kann und nach dem Wiegen automatisch durch besagte Bewegungsrichtungsumkehr wieder in Richtung zu der Startposition zurückgefördert werden kann. In dem Bereich zwischen der Startposition und der Zielposition ist besagter Wägeabschnitt vorgesehen, bei dem es sich um einen Abschnitt des Förderbereichs handelt, in welchem sich das Produkt wiegen lässt. Auf diese Weise kann ein Produkt bzw. Prüfgut automatisch mehrfach gewogen werden, ohne die Notwendigkeit, dass eine Bedienperson dieses mehrfach von der Fördereinrichtung aufnehmen und an der Startposition wieder auf dieser platzieren muss.

Im Folgenden werden nun verschiedene Ausgestaltungen der erfindungsgemäßen Wägevorrichtung beschrieben, die auch Gegenstand der Unteransprüche sind.

So ist gemäß einer Ausgestaltung der erfindungsgemäßen Wägevorrichtung vorgesehen, dass die Steuereinrichtung derart konfiguriert ist, dass in einer ersten Arbeitsschrittsequenz während des Betriebs der Fördereinrichtung in Richtung von der Startposition zu der Zielposition automatisch ein Wägevorgang mittels der Waage durchführbar ist. Da sich bei diesem Wägevorgang die Fördereinrichtung und somit auch das Produkt bewegt, handelt es sich um einen dynamischen Wägevorgang.

Weiter kann vorgesehen sein, dass die Steuereinrichtung derart konfiguriert ist, dass in einer zweiten (alternativen) Arbeitsschrittsequenz, die der ersten Arbeitsschrittsequenz folgt oder vorangeht, nach Beendigung des Betriebs (der Bewegung) der Fördereinrichtung in Richtung von der Startposition zu der Zielposition automatisch ein Wägevorgang mittels der Waage im angehaltenen Zustand der Fördereinrichtung durchführbar ist, wobei insbesondere die Fördereinrichtung danach automatisch in die Richtung von der Zielposition zu der Startposition betrieben werden kann. In diesem Fall steht die Fördereinrichtung und somit auch das Produkt während des Wägevorgangs still, wodurch ein statischer Wägevorgang durchgeführt wird.

Idealerweise werden beide Arbeitsschrittsequenzen nacheinander durchgeführt, was insbesondere automatisch (ohne Eingriff einer Bedienperson) erfolgt. Dabei spielt es keine Rolle, ob die erste Arbeitsschrittsequenz vor der anderen Arbeitsschrittsequenz oder danach durchgeführt wird. Wesentlich ist lediglich, dass aus jeder Arbeitsschrittsequenz ein Messwert oder Mittelwert aus mehreren Messwerten gebildet und mit einem Messwert oder Mittelwert aus mehreren Messwerten der jeweils anderen Arbeitsschrittsequenz verglichen wird. Die Differenz zwischen den jeweils durch die beiden Arbeitsschrittsequenzen bestimmten (Mittel-)Werten ist dann der Korrekturwert, der den Messwerten aus künftigen dynamischen Wägevorgängen immer hinzuaddiert werden muss, um das tatsächliche Gewicht des gewogenen Produkts möglichst genau zu ermitteln. Besagter Korrekturwert wird vorzugsweise von der Steuereinrichtung gespeichert. Dabei ist es bevorzugt, wenn die beschriebene Kalibrierung zur Kompensation des statisch-dynamischen Versatzes für unterschiedliche Gewichte oder Gewichtsbereiche durchgeführt wird und entsprechende unterschiedliche Korrekturwerte ermittelt und in einer Datenbank der Steuereinrichtung gespeichert werden. Zusätzlich oder alternativ können auf diese Weise auch unterschiedliche Korrekturwerte für unterschiedliche Verpackungsformen (unterschiedliche Länge und/oder Breite und/oder Höhe und/oder Außenkontur), für unterschiedliche Verpackungsinhalte (Unterscheidung nach Feststoff oder Flüssigkeit) oder für unterschiedliche Transportgeschwindigkeiten ermittelt und gespeichert werden. Insbesondere wird zur Bestimmung eines Korrekturwerts für ein bestimmtes Produkt nicht nur eine einzelne Packung (Einheit) exemplarisch gewogen, sondern eine repräsentative Auswahl von Packungen (Einheiten) desselben Produkts.

Gemäß einer weiteren Ausgestaltung der erfindungsgemäßen Wägevorrichtung ist vorgesehen, dass die Steuereinrichtung derart konfiguriert ist, dass die erste Arbeitsschrittsequenz (dynamischer Wägevorgang) und/oder die zweite Arbeitsschrittsequenz (statischer Wägevorgang) automatisch mehrfach durchlaufen werden kann. Mit anderen Worten bewirkt die Steuereinrichtung mehrere aufeinander folgende statische Wägevorgänge und/oder mehrere aufeinander folgende dynamische Wägevorgänge. Beispielsweise wird die erste Arbeitsschrittsequenz, bei der dynamisch gewogen wird, 2-fach bis 40-fach, bevorzugt 10-fach bis 30-fach, besonders bevorzugt 15-fach bis 25-fach, durchlaufen. Die zweite Arbeitsschrittsequenz, bei der statisch gewogen wird, wird insbesondere weniger oft als die erste Arbeitsschrittsequenz durchlaufen, beispielsweise 2-fach bis 10-fach, bevorzugt 2-fach bis 5-fach, besonders bevorzugt 2-fach bis 3-fach. Die Anzahl der Wägevorgänge kann fest vorgegeben sein. Es ist aber auch denkbar, dass die Anzahl der Wägevorgänge variabel ist und insbesondere abhängig von der Streuung der Messwerte (Standardabweichung), gegebenenfalls geknüpft an die Fehlergrenzen der Wägevorrichtung, von der Steuereinrichtung oder manuell, einstellbar ist.

Gemäß wieder einer weiteren Ausgestaltung der erfindungsgemäßen Wägevorrichtung weist diese ferner mindestens ein bewegbares Führungselement, vorzugsweise zwei bewegbare Führungselemente, auf, wobei das jeweilige Führungselement zwischen einer vorspringenden Position, in der das Führungselement insbesondere abschnittsweise an den Förderbereich angrenzt oder zumindest abschnittsweise in den Förderbereich hineinragt, und einer zurückliegenden Position, in der das Führungselement insbesondere vom Förderbereich beabstandet ist, das heißt außerhalb des Förderbereichs liegt, verfahrbar ist. Mit "vorspringend" ist gemeint, dass das Führungselement näher zur Bandmitte bzw. Fördereinrichtungsmitte angeordnet ist als in der zurückliegenden Position. Die Bewegung zwischen der vorspringenden und der zurückliegenden Position kann jeweils auch automatisch durchgeführt werden, insbesondere gesteuert durch die Steuereinrichtung der Wägevorrichtung. Das jeweilige Führungselement ist insbesondere derart angeordnet, dass das Produkt entlang des Förderbereichs an dem Führungselement vorbeigeführt wird. Mit anderen Worten ist das jeweilige Führungselement entlang eines Abschnitts des Förderbereichs angeordnet, der zwischen der Startposition und der Zielposition, insbesondere zwischen der Startposition und dem Wägeabschnitt, in dem das jeweilige Produkt gewogen wird, liegt. Das jeweilige Führungselement kann auch abschnittsweise in den Wägeabschnitt hineinragen.

Ein entsprechendes Führungselement erlaubt es, das Produkt, während es sich auf dem Förderbereich von der Startposition in Richtung der Zielposition bewegt, auf bestimmte Weise auszurichten. Auf diese Weise ist gewährleistet, dass das Produkt auch bei mehrmaligem Durchlaufen des Förderbereichs von der Startposition in Richtung der Zielposition immer auf dieselbe Weise auf der Fördereinrichtung angeordnet ist, wodurch sichergestellt ist, dass das Produkt immer in derselben Ausrichtung auf die Waage bzw. über die Waage hinweg transportiert wird. Dies wiederum minimiert das Risiko von Abweichungen zwischen einzelnen Messergebnissen und erlaubt eine genauere und schnellere Bestimmung eines Mittelwerts eines dynamischen Wägevorgangs einerseits und eines statischen Wägevorgangs andererseits.

In diesem Zusammenhang ist gemäß noch einer Ausgestaltung der erfindungsgemäßen Wägevorrichtung vorgesehen, dass die Steuereinrichtung derart konfiguriert ist, dass das Führungselement beim Betrieb der Fördereinrichtung in Richtung von der Startposition zu der Zielposition in der vorspringenden Position und/oder beim Betrieb der Fördereinrichtung in Richtung von der Zielposition zu der Startposition in der zurückliegenden Position angeordnet ist. Mit anderen Worten ist es möglich, das jeweilige Führungselement oder bei Vorhandensein von zwei Führungselementen beide Führungselemente dann in eine zurückliegende Position außerhalb des Förderbereichs zu verfahren, wenn das Produkt nach dem Wägevorgang wieder zurück in die Startposition gefördert wird. Indem bei dem Zurückbewegen des Produkts in die Startposition das bzw. die Führungselemente außerhalb des Förderbereichs angeordnet sind, besteht nicht die Gefahr, dass das Produkt mit einem Führungselement in Kontakt kommt und im schlimmsten Fall in eine andere Position verschoben wird. Beim Zurückbewegen des Produkts in die Startposition bleibt die Ausrichtung des Produkts also unverändert oder zumindest weitestgehend unverändert.

Bevor dann das Produkt wieder von der Startposition in Richtung des Wägeabschnitts bewegt wird, wird das jeweilige Führungselement bevorzugt wieder in die vorspringende Position bewegt, um sicherzustellen, dass das Produkt möglichst exakt wie bei der vorherigen Messung ausgerichtet ist. Letzteres ist zwar nicht unbedingt notwendig, insbesondere nicht dann, wenn die Fördereinrichtung mit dem aufliegenden Produkt relativ langsam hin- und herbewegt wird. Jedoch kann es, um den Vorgang des Kalibrierens zur statisch-dynamischen Kompensation zeitlich zu verkürzen, auch gewollt sein, das Produkt und somit die Fördereinrichtung möglichst schnell hin- und herzubewegen. Dabei kann es unter Umständen doch dazu kommen, dass das Produkt beim Zurückfahren in die Startposition und bei der anschließenden Bewegungsrichtungsumkehr geringfügig verrutscht, wobei die Position dann aber durch die Führungselemente, die dann wieder in der vorspringenden Position sind, wieder korrigiert wird.

Gemäß wieder einer weiteren Ausgestaltung der erfindungsgemäßen Wägevorrichtung ist die Fördereinrichtung ein Bandförderer oder ein Rollenförderer. Unter dem Begriff "Bandförderer" werden neben Gurtförderern auch Riemen- und Kettenförderer sowie Plattenbandförderer und Kettengliederförderer verstanden. Der Bandförderer kann wiederum aus einem oder mehreren in Transportrichtung aufeinander folgenden Einzelbändern bestehen, wobei die Waage in eines der Förderbänder integriert oder zwischen zwei Förderbändern platziert sein kann. Ein Rollenförderer weist insbesondere eine Vielzahl von Rollen auf, wobei dann die Waage vorzugsweise zwischen zwei benachbarten Rollen angeordnet ist. Auch eine Kombination von Band- und Rollenförderer ist denkbar, wobei dann die Waage vorzugsweise zwischen dem Band- und dem Rollenförderer angeordnet ist.

Weiter ist gemäß noch einer Ausgestaltung der erfindungsgemäßen Wägevorrichtung vorgesehen, dass die Wägevorrichtung ferner eine Etikettenaufbringeinrichtung aufweist, die insbesondere einen Drucker aufweist, wobei der Förderbereich von der Startposition zu der Zielposition an der Etikettenaufbringeinrichtung vorbeiführt oder endet. Nach erfolgter Kalibrierung zur Kompensation des statisch-dynamischen Versatzes kann dann der reguläre Betrieb der Wägevorrichtung aufgenommen werden, indem beispielsweise einzelne Produkte nacheinander dynamisch gewogen werden und jeweils mit einem Etikett versehen werden, das eine dem Messergebnis entsprechende Produktinformation enthält.

Die Aufgabe wird ferner gemäß einer zweiten Lehre der vorliegenden Erfindung auch gelöst durch ein Verfahren nach Anspruch 9 zum Wiegen eines Produkts, insbesondere unter

Verwendung einer wie zuvor definierten Wägevorrichtung, bei dem nacheinander in der angegebenen Reihenfolge die folgenden Schritte durchgeführt werden:
a) Platzieren eines Produkts auf einer Fördereinrichtung in einer Startposition,
b) Betreiben der Fördereinrichtung (in einer ersten Richtung), so dass das Produkt in Richtung von der Startposition zu einer Zielposition entlang eines Förderbereichs gefördert wird,
c) Wiegen des Produkts, wenn sich das Produkt in einem Wägeabschnitt auf bzw. über einer Waage befindet, wobei der Wägeabschnitt auf dem Förderbereich zwischen der Startposition und der Zielposition liegt,
d) Betreiben der Fördereinrichtung (in einer zweiten Richtung), so dass das Produkt in Richtung von der Zielposition zu der Startposition gefördert wird,
e) Anhalten der Fördereinrichtung, wenn sich das Produkt nicht mehr in dem Wägeabschnitt befindet und insbesondere wenn sich das Produkt wieder in der Startposition befindet.

Mit anderen Worten wird, insbesondere zum Zwecke einer Kalibrierung einer Wägevorrichtung zur Kompensation eines statisch-dynamischen Versatzes, bei dem erfindungsgemäßen Verfahren ein Produkt bzw. Prüfgut in Richtung von einer Startposition zu einer Zielposition gefördert und dabei gewogen. Der Wägevorgang wird dabei statisch oder dynamisch durchgeführt. Anschließend wird das Produkt wieder in Richtung der Startposition, das heißt in entgegengesetzter Richtung, transportiert. Dann kann das Produkt wieder in Richtung von der Startposition zu der Zielposition gefördert und dabei ein erneuter Wägevorgang durchgeführt werden.

Gemäß einer Ausgestaltung des erfindungsgemäßen Verfahrens wird die Fördereinrichtung zum Wiegen des Produkts, insbesondere automatisch, angehalten (statischer Wägevorgang) oder während des Wiegens des Produkts weiter betrieben (dynamischer Wägevorgang).

Wie ebenfalls zuvor bereits erläutert, ist es bevorzugt, wenn die Schrittfolge aus den Schritten b) bis e) mehrfach nacheinander, insbesondere automatisch, durchlaufen wird. Die Wiederholung erlaubt die Berechnung eines Mittelwertes aus mehreren Messwerten, darüber die Berechnung eines Korrekturwerts und daraus wiederum im späteren regulären Betrieb der Wägevorrichtung die möglichst genaue Ermittlung des tatsächlichen Gewichts des Produkts.

Insbesondere ist bei dem erfindungsgemäßen Verfahren vorgesehen, dass der Mittelwert der Messwerte, die beim Wiegen des Produkts im angehaltenen Zustand der Fördereinrichtung ermittelt worden sind, mit dem Mittelwert der Messwerte verglichen wird, die beim Wiegen des Produkts während des Betriebs, das heißt während der Bewegung, der Fördereinrichtung ermittelt worden sind. In dem Fall, dass bei dem Kalibriervorgang nur eine einzelne statische Messung oder nur eine einzelne dynamische Messung durchgeführt wird, wird der einzelne Messwert im Sinne der Erfindung auch als Mittelwert verstanden.

Schließlich ist, was ebenfalls bereits erläutert wurde, ein bewegbares Führungselement vorgesehen, das insbesondere automatisch zwischen einer vorspringenden Position und einer zurückliegenden Position bewegt wird, vorzugsweise derart, dass beim Bewegen des Produkts in Richtung von der Startposition zu der Zielposition das jeweilige Führungselement in der vorspringenden Position und bei umgekehrter Bewegungsrichtung in der zurückliegende Position angeordnet ist.

Es gibt nun eine Vielzahl von Möglichkeiten, die erfindungsgemäße Wägevorrichtung und das erfindungsgemäße Verfahren zum Wiegen eines Produkts auszugestalten und weiterzubilden. Diesbezüglich sei einerseits verwiesen auf die den nebengeordneten

Patentansprüchen 1 und 9 nachgeordneten Patentansprüche, andererseits auf die Beschreibung eines Ausführungsbeispiels in Verbindung mit der Zeichnung. In der Zeichnung zeigt:
- Fig. 1: eine schematische Ansicht einer Wägevorrichtung unmittelbar nach dem Start einer ersten oder zweiten Arbeitsschrittsequenz,
- Fig. 2: die Wägevorrichtung aus Fig. 1 im weiteren Verlauf der Durchführung der ersten Arbeitsschrittsequenz und
- Fig. 3: die Wägevorrichtung aus Fig. 1 im weiteren Verlauf der Durchführung der zweiten Arbeitsschrittsequenz.

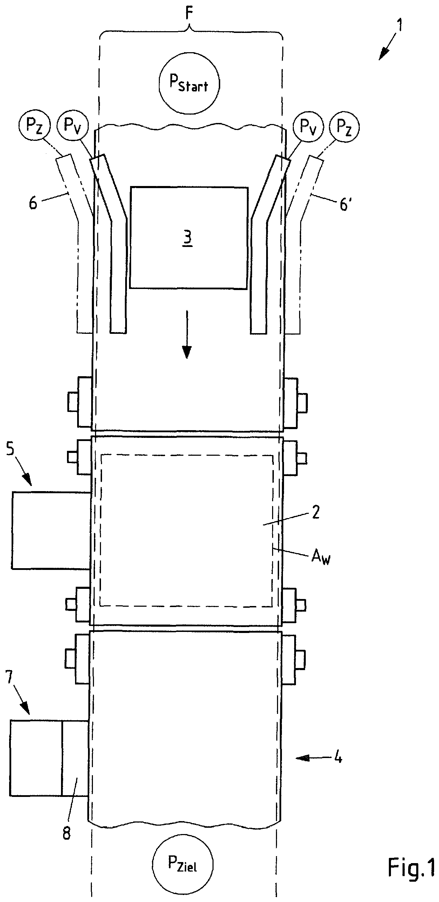

In Fig. 1 ist in einer Draufsicht schematisch eine Wägevorrichtung 1 in Form einer Preisauszeichnungsvorrichtung oder eines Checkweighers dargestellt. Die Wägevorrichtung 1 weist eine Waage 2 zum Wiegen eines Produkts 3 in einem Wägeabschnitt Aw sowie eine Fördereinrichtung 4 zum Transport des Produkts 3 entlang eines Förderbereichs F von einer Startposition Pstart über den Wägeabschnitt Aw zu einer Zielposition P_{Ziel} auf.

Bei der Fördereinrichtung 4 handelt es sich im vorliegenden Fall um einen mehrteiligen Bandförderer, wobei die Waage 2 in einen mittleren Abschnitt des mehrteiligen Bandförderers integriert ist.

Die Wägevorrichtung 1 weist ferner eine Steuereinrichtung 5 auf, die unter anderem die Fördereinrichtung 4, insbesondere die Geschwindigkeit und Laufrichtung der Fördereinrichtung 4, steuert. Die Steuerung erfolgt zeit- und/oder wegabhängig und/oder unter Berücksichtigung von Positionsdaten des sich jeweils bewegenden Produkts. Die Positionsdaten können beispielsweise durch ein mit der Steuereinrichtung 5 verbundenes optisches System (nicht dargestellt), beispielsweise mit einer Kamera oder Lichtschranke, ermittelt werden.

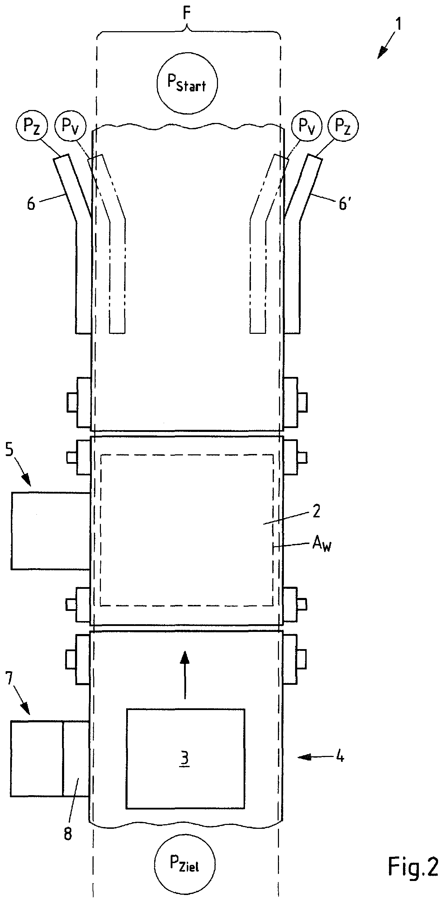

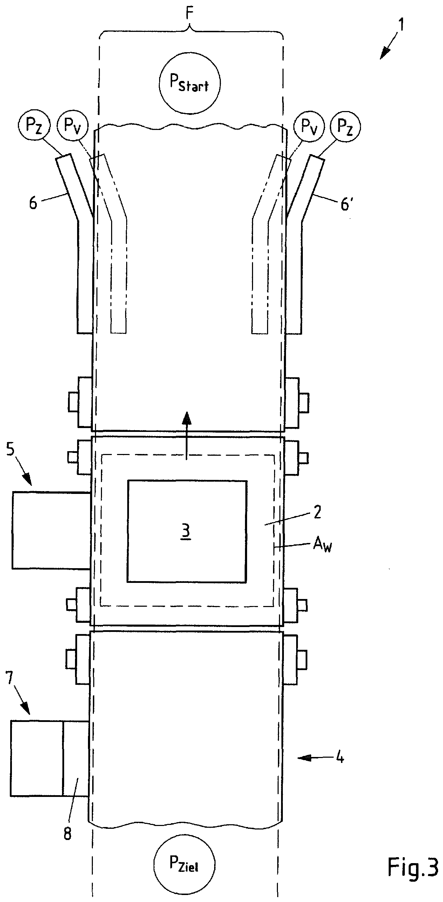

Außerdem weist die Wägevorrichtung 1 zwei bewegbare Führungselement 6 und 6' auf, die entlang eines Abschnitt des Förderbereichs F angeordnet sind, der zwischen der Startposition P_{Start} und dem Wägeabschnitt Aw liegt. Die Führungselemente 6 und 6' können jeweils, insbesondere unabhängig voneinander oder gleichzeitig, zwischen einer vorspringenden Position Pv und einer zurückliegenden Position Pz bewegt werden. Die vorspringende Position Pv ist in Fig. 1 und die zurückliegende Position Pz in den Figuren 2 und 3 dargestellt. Wie bei Vergleich der Fig. 1 einerseits mit den Figuren 2 und 3 andererseits deutlich erkennbar ist, ragen die Führungselemente 6 und 6' in der vorspringenden Position Pv zumindest abschnittsweise in den Förderbereich F hinein, wohingegen die beiden Führungselemente 6 und 6' in der zurückliegenden Position Tz außerhalb des Förderbereichs F liegen.

Schließlich weist die Wägevorrichtung 1 noch eine Etikettenaufbringrichtung 7 mit einem Drucker 8 auf, die so angeordnet ist, dass ein Produkt 3 auf dem Förderbereich F von der Startposition P_{Start} zu der Zielposition P_{Ziel} an der Etikettenaufbringeinrichtung 7 vorbeigeführt und/oder mit einem Etikett versehen werden kann. Auf diese Weise kann nach erfolgter Kalibrierung der erfindungsgemäßen Wägevorrichtung 1, was im Folgenden noch beschrieben wird, ein Preisauszeichnungsvorgang durchgeführt werden, bei dem mehrere Produkte 3 nacheinander in Bewegung von der Waage 2 gewogen werden und das jeweilige Messergebnis beim Bedrucken des dem Produkt 3 zugeordneten Etiketts Berücksichtigung findet.

Der Kalibrierungsvorgang zur Kompensation des statisch-dynamischen Versatzes wird nun im Folgenden näher beschrieben.

So ist die Steuereinrichtung 5 derart konfiguriert, dass die Fördereinrichtung 4, im vorliegenden Fall also der Bandförderer bzw. das mindestens eine Transportband, während des Betriebs in eine Richtung von der Startposition P_{Start} zu der Zielposition P_{Ziel} automatisch angehalten und dann automatisch in eine Richtung von der Zielposition P_{Ziel} zu der Startposition P_{Start}, also in umgekehrter Richtung, betrieben werden kann. Die Steuereinrichtung 5 erlaubt dabei, in einer ersten Arbeitsschrittsequenz während des Betriebs der Fördereinrichtung in Richtung von der Startposition P_{Start} zu der Zielposition P_{Ziel} automatisch einen dynamischen Wägevorgang mittels der Waage 2 durchzuführen.

Zusätzlich erlaubt die Steuereinrichtung 5 in einer anderen Arbeitsschrittsequenz einen statischen Wägevorgang mittels der Waage 2 durchzuführen, wenn die Fördereinrichtung 4 angehalten ist.

Dabei kann sowohl die erste Arbeitsschrittsequenz als auch die zweite Arbeitsschrittsequenz automatisch mehrfach durchlaufen werden, um mehrere Messergebnisse zu erhalten, aus denen dann jeweils ein Mittelwert gebildet wird.

In Fig. 1 ist dargestellt, wie zu Beginn einer der beiden Arbeitsschrittsequenzen das Produkt 3 von der Startposition P_{Start} in Richtung des Wägeabschnitts Aw und der Zielposition P_{Ziel} gefördert wird. Das Produkt 3 befindet sich im dargestellten Zustand noch in einem ersten Abschnitt der Fördereinrichtung 4, wobei entlang dieses Abschnitts die besagten Führungselemente 6 und 6' seitlich angeordnet sind. Die Führungselemente 6 und 6' befinden sich hier in der zur Bandmitte vorspringenden Position Pv, in der die Führungselemente 6 und 6' das Produkt 3 berühren und dadurch ausrichten können.

Das Produkt 3 wird von der in Fig. 1 dargestellten Position weiter zum Wägeabschnitt Aw gefördert und dort entweder dynamisch (bei Ablauf der ersten Arbeitsschrittsequenz, siehe Fig.2) oder statisch (bei Ablauf der zweiten Arbeitsschrittsequenz, siehe Fig. 3) gewogen.

Im Falle eines dynamischen Wägevorgangs wird das Produkt 3 über die Waage 2 hinweg gefördert und in dem Zeitabschnitt, in welchem sich das Produkt vertikal über der Waage 2 befindet, gewogen. In diesem Fall wird das Produkt 3 anschließend, wie Fig. 2 zeigt, in einer Richtung von der Zielposition P_{Ziel} zur Startposition Pstart durch Drehrichtungsumkehr der Fördereinrichtung 4 wieder zurücktransportiert, bis es den Wägeabschnitt Aw verlassen hat und insbesondere wieder in der Startposition P_{Start} angelangt ist. Dieser dynamische Wägevorgang kann mehrmals wiederholt werden, wobei das Produkt 3 insbesondere mit der selben Geschwindigkeit und/oder Ausrichtung wie bei dem jeweils vorangehenden Wägevorgang gewogen wird.

In Fig. 3 ist schließlich ein Teil der zweiten Arbeitsschrittsequenz, nämlich der statische Wägevorgang, dargestellt. In der zweiten Arbeitsschrittsequenz wird das Produkt 3 von der Fördereinrichtung 4 genau vertikal über der Waage 2 platziert und die Fördereinrichtung 4 in dieser Position angehalten. Das Produkt 3 wird dann im Stillstand gewogen. Anschließend wird das Produkt 3, wie Fig. 3 zeigt, ebenfalls durch Drehrichtungsumkehr der Fördereinrichtung 4 wieder zurücktransportiert, bis es den Wägeabschnitt Aw verlassen hat und insbesondere wieder in der Startposition Pstart angelangt ist. Dieser statische Wägevorgang kann ebenfalls mehrmals wiederholt werden, wobei das Produkt 3 insbesondere mit der selben Geschwindigkeit und/oder Ausrichtung wie bei dem jeweils vorangehenden Wägevorgang dem Wägeabschnitt Aw zugeführt wird. Im Bedarfsfall kann aber auch schon ein einzelner statischer Wägevorgang zum Zwecke einer Kalibrierung ausreichen. Grundsätzlich ist es bei der vorschlägsgemäßen Wägevorrichtung 1 bzw. dem vorschlägsgemäßen Verfahren auch denkbar, den statischen Gewichtswert händisch einzugeben/zu speichern, nachdem das (statische) Gewicht mittels einer Kontrollwaage ermittelt wurde.

Beim Zurückbewegen des Produkts 3 in Richtung von der Zielposition P_{Ziel} zur Startposition P_{Start} werden die beiden bewegbaren Führungselemente 6 und 6' in die in den Figuren 2 und 3 gezeigte zurückliegende Position Pz verfahren, so dass das Produkt 3 beim Passieren der Führungselemente 6 und 6' mit diesen nicht in Kontakt kommen kann. Bevor die erste oder zweite Arbeitsschrittsequenz erneut durchlaufen wird, werden die Führungselemente 6 und 6' wieder in die vorspringende Position Pv gemäß Fig. 1 verfahren. Dies geschieht durch die Steuereinrichtung 5 automatisch.

Schließlich soll die Erfindung noch anhand des folgenden beispielhaften Verfahrensablaufs näher erläutert werden, bei dem zunächst der folgende Schritt, insbesondere durch eine Bedienperson oder automatisch durch die Steuereinrichtung 5 unter Verwendung einer Zuführeinrichtung (nicht dargestellt), durchgeführt wird:
a) Platzieren eines Produkts 3 auf einer Fördereinrichtung 4 in einer Startposition P_{Start},
   Danach erlaubt die Steuereinrichtung 5 der Wägevorrichtung 1 die Durchführung der folgenden Schritte in der angegebenen Reihenfolge:
b) Betreiben der Fördereinrichtung 4, derart dass das Produkt 3 in Richtung von der Startposition P_{Start} zu einer Zielposition P_{Ziel} entlang eines Förderbereichs F und vorbei an zwei vorspringenden Führungselementen 6 und 6', die das Produkt 3 ausrichten, gefördert wird,
c) Wiegen des Produkts 3, wenn sich das Produkt 3 in einem Wägeabschnitt Aw über einer Waage 2 befindet, wobei der Wägeabschnitt Aw auf dem Förderbereich F zwischen der Startposition Pstart und der Zielposition P_{Ziel} liegt, wobei gemäß einer ersten Arbeitsschrittsequenz die Fördereinrichtung 4 beim Wiegen des Produkts 3 weiterläuft und erst nach dem Wiegen angehalten wird oder wobei gemäß einer alternativen Arbeitsschrittsequenz die Fördereinrichtung 4 schon zum Wiegen des Produkts 3 angehalten wird,
d) Betreiben (d.h. Wiederanfahren) der Fördereinrichtung 4, so dass das Produkt 3 in Richtung von der Zielposition P_{Ziel} zur Startposition P_{Start} gefördert wird,
e) Anhalten der Fördereinrichtung 4, nachdem das Produkt 3 die zurückgefahrenen Führungselemente 6 und 6' teilweise oder vollständig passiert hat.

Um mehrere Messwerte zu erhalten, werden die Schritte b) bis e) automatisch in jeder der beiden Arbeitsschrittsequenzen mehrfach nacheinander durchlaufen. Aus den einzelnen Messwerten wird dann in einem weiteren Verfahrensschritt jeweils ein Mittelwert für den dynamischen Messvorgang und ein Mittelwert für den statischen Messvorgang ermittelt. In noch einem weiteren Verfahrensschritt werden die Mittelwerte miteinander verglichen und die Differenz als Korrekturwert für die statisch-dynamische Kompensation gespeichert.

Im späteren regulären Wägeverfahren, das heißt nach Kalibrierung der Wägevorrichtung, bei dem nacheinander mehrere Produkte 3 dynamisch gewogen werden, wird dann der zuvor ermittelte Korrekturwert jedem Messergebnis hinzuaddiert, um auf das tatsächliche Gewicht zu schließen.

## Patentansprüche

1. Wägevorrichtung (1), insbesondere Preisauszeichnungsvorrichtung oder Kontrollwaage,
- mit einer Waage (2) zum Wiegen eines Produkts (3) in einem Wägeabschnitt (A_{W}),
- mit einer Fördereinrichtung (4) zum Transport des Produkts (3) entlang eines Förderbereichs (F) von einer Startposition (P_{Start}) über den Wägeabschnitt (A_{W}) zu einer Zielposition (P_{Ziel}),
**dadurch gekennzeichnet, dass** die Wägevorrichtung (1) ferner eine Steuereinrichtung (5) aufweist, die derart konfiguriert ist, dass die Fördereinrichtung (4) während ihres Betriebs mit aufgesetztem Produkt (3) in eine Richtung von der Startposition (P_{Start}) zu der Zielposition (P_{Ziel}) automatisch angehalten und dann automatisch in eine Richtung von der Zielposition (P_{Ziel}) zu der Startposition (P_{Start}) betrieben wird, bis das Produkt (3) den Wägeabschnitt A_{W} verlassen hat.

2. Wägevorrichtung (1) nach Anspruch 1, **dadurch gekennzeichnet, dass** die Steuereinrichtung (5) derart konfiguriert ist, dass in einer ersten Arbeitsschrittsequenz während des Betriebs der Fördereinrichtung (4) in Richtung von der Startposition (P_{Start}) zu der Zielposition (P_{Ziel}) automatisch ein Wägevorgang mittels der Waage (2) durchführbar ist.

3. Wägevorrichtung (1) nach Anspruch 1 oder 2, **dadurch gekennzeichnet, dass** die Steuereinrichtung (5) derart konfiguriert ist, dass in einer anderen Arbeitsschrittsequenz, die der ersten Arbeitsschrittsequenz folgt oder vorangeht, nach Beendigung des Betriebs der Fördereinrichtung (4) in Richtung von der Startposition (P_{Start}) zu der Zielposition (P_{Ziel}) im angehaltenen Zustand der Fördereinrichtung (4) automatisch ein Wägevorgang mittels der Waage (2) durchführbar ist, wobei insbesondere die Fördereinrichtung (4) danach automatisch in die Richtung von der Zielposition (P_{Ziel}) zu der Startposition (P_{Start}) betrieben werden kann.

4. Wägevorrichtung (1) nach Anspruch 2 oder 3, **dadurch gekennzeichnet, dass** die Steuereinrichtung (5) derart konfiguriert ist, dass die erste Arbeitsschrittsequenz und/oder die zweite Arbeitsschrittsequenz automatisch mehrfach durchlaufen werden kann.

5. Wägevorrichtung (1) nach einem der vorangehenden Ansprüche, **dadurch gekennzeichnet, dass** die Wägevorrichtung (1) ferner mindestens ein bewegbares Führungselement (6,6') aufweist, das zwischen einer vorspringenden Position (P_{V}), in der das Führungselement (6,6') insbesondere zumindest abschnittsweise an den Förderbereich (F) angrenzt oder zumindest abschnittsweise in den Förderbereich (F) hineinragt, und einer zurückliegenden Position (P_{Z}), in der das Führungselement (6,6') insbesondere vom Förderbereich (F) beabstandet ist, verfahrbar ist, vorzugsweise, dass das Führungselement (6,6') derart angeordnet ist, dass das Produkt (3) entlang des Förderbereichs (F) an dem Führungselement (6,6') vorbeigeführt wird.

6. Wägevorrichtung (1) nach Anspruch 5, **dadurch gekennzeichnet, dass** die Steuereinrichtung (5) derart konfiguriert ist, dass das Führungselement (6,6') beim Betrieb der Fördereinrichtung (4) in Richtung von der Startposition (P_{Start}) zu der Zielposition (P_{Ziel}) in der vorspringenden Position (P_{V}) und/oder beim Betrieb der Fördereinrichtung (4) in Richtung von der Zielposition (P_{Ziel}) zu der Startposition (P_{Start}) in der zurückliegenden Position (P_{Z}) angeordnet ist.

7. Wägevorrichtung (1) nach einem der vorangehenden Ansprüche, **dadurch gekennzeichnet, dass** die Fördereinrichtung (4) ein Bandförderer oder ein Rollenförderer ist.

8. Wägevorrichtung (1) nach einem der vorangehenden Ansprüche, **dadurch gekennzeichnet, dass** die Wägevorrichtung (1) ferner eine Etikettenaufbringeinrichtung (7) aufweist, die insbesondere einen Drucker (8) aufweist, wobei der Förderbereich (F) von der Startposition (P_{Start}) zu der Zielposition (P_{Ziel}) an der Etikettenaufbringeinrichtung (7) vorbeiführt oder endet.

9. Verfahren zum Wiegen eines Produkts (3), insbesondere unter Verwendung einer Wägevorrichtung (1) nach einem der vorangehenden Ansprüche, bei dem nacheinander in der angegebenen Reihenfolge die folgenden Schritte durchgeführt werden:
a) Platzieren eines Produkts (3) auf einer Fördereinrichtung (4) in einer Startposition (P_{Start}),
b) Betreiben der Fördereinrichtung (4), so dass das Produkt (3) in Richtung von der Startposition (P_{Start}) zu einer Zielposition (P_{Ziel}) entlang eines Förderbereichs (F) gefördert wird,
c) Wiegen des Produkts (3), wenn sich das Produkt (3) in einem Wägeabschnitt (A_{W}) über einer Waage (2) befindet, wobei der Wägeabschnitt (A_{W}) auf dem Förderbereich (F) zwischen der Startposition (P_{Start}) und der Zielposition (P_{Ziel}) liegt,
d) Betreiben der Fördereinrichtung (4), so dass das Produkt (3) in Richtung von der Zielposition (P_{Ziel}) zu der Startposition (P_{Start}) gefördert wird,
e) Anhalten der Fördereinrichtung (4), wenn sich das Produkt (3) nicht mehr in dem Wägeabschnitt (A_{W}) befindet.

10. Verfahren nach Anspruch 9, **dadurch gekennzeichnet, dass** die Fördereinrichtung (4) zum Wiegen des Produkts (3), insbesondere automatisch, angehalten wird.

11. Verfahren nach Anspruch 9, **dadurch gekennzeichnet, dass** die Fördereinrichtung (4) während des Wiegens des Produkts (3) weiter betrieben wird.

12. Verfahren nach Anspruch 10 oder 11, **dadurch gekennzeichnet, dass** die Schrittfolge aus den Schritten b) bis e) mehrfach nacheinander, insbesondere automatisch, durchlaufen wird, vorzugsweise, dass aus den in Schritt c) ermittelten Messwerten, die beim Wiegen des Produkts (3) im angehaltenen Zustand der Fördereinrichtung (4) ermittelt worden sind, und den in Schritt c) ermittelten Messwerten, die beim Wiegen des Produkts (3) während des Betriebs der Fördereinrichtung (4) ermittelt worden sind, jeweils ein Mittelwert gebildet wird.

13. Verfahren nach Anspruch 12, **dadurch gekennzeichnet, dass** der Mittelwert der Messwerte, die beim Wiegen des Produkts (3) im angehaltenen Zustand der Fördereinrichtung (4) ermittelt worden sind, mit dem Mittelwert der Messwerte verglichen wird, die beim Wiegen des Produkts (3) während des Betriebs der Fördereinrichtung (4) ermittelt worden sind.

14. Verfahren nach einem der Ansprüche 9 bis 13, **dadurch gekennzeichnet, dass** in Schritt b) ein bewegbares Führungselement (6,6') in einer vorspringenden Position (P_{V}) derart an den Förderbereich (F) angrenzt oder zumindest abschnittsweise in den Förderbereich (F) hineinragt, dass ein auf der Fördereinrichtung (4) am Führungselement (6,6') vorbeigeführtes Produkt (3) mit dem Führungselement (6,6') in Kontakt kommt und/oder von dem Führungselement (6,6') ausgerichtet wird, vorzugsweise, dass in Schritt d) das bewegbare Führungselement (6,6') in einer zurückliegenden Position (P_{Z}) derart außerhalb des Förderbereichs (F) liegt, dass ein auf der Fördereinrichtung (4) am Führungselement (6,6') vorbeigeführtes Produkt (3) nicht mit dem Führungselement (6,6') in Kontakt kommt.

15. Verfahren nach Anspruch 14, **dadurch gekennzeichnet, dass** das bewegbare Führungselement (6,6') in oder vor dem Schritt b) automatisch in die vorspringende Position (P_{V}) und/oder in oder vor dem Schritt d) automatisch in die zurückliegende Position (P_{Z}) verfahren wird.

## Claims

1. Weighing apparatus (1), in particular price labelling apparatus or check weigher,
- with a scale (2) for weighing a product (3) in a weighing section (A_{W}),
- with a conveying device (4) for transporting the product (3) along a conveying region (F) from a start position (P_{Start}) via the weighing section (Aw) to a target position (P_{Ziel}),
**characterized in that** the weighing apparatus (1) has, furthermore, a control device (5) which is configured in such a way that, during its operation with a product (3) placed on it in a direction from the start position (P_{Start}) to the target position (P_{Ziel}), the conveying device (4) is stopped automatically, and is then driven automatically in a direction from the target position (P_{Ziel}) to the start position (P_{Start}) until the product (3) has left the weighing section Aw.

2. Weighing apparatus (1) according to Claim 1, **characterized in that** the control device (5) is configured in such a way that, in a first working step sequence during the operation of the conveying device (4) in the direction from the start position (P_{Start}) to the target position (P_{Ziel}), a weighing operation can be automatically carried out by means of the scale (2).

3. Weighing apparatus (1) according to Claim 1 or 2, **characterized in that** the control device (5) is configured in such a way that, in another working step sequence which follows or precedes the first working step sequence, after ending of the operation of the conveying device (4) in the direction from the start position (P_{Start}) to the target position (P_{Ziel}), a weighing operation can be automatically carried out by means of the scale (2) in the stopped state of the conveying device (4), it being possible, in particular, for the conveying device (4) to be operated automatically in the direction from the target position (P_{Ziel}) to the start position (P_{Start}) afterwards.

4. Weighing apparatus (1) according to Claim 2 or 3, **characterized in that** the control device (5) is configured in such a way that the first working step sequence and/or the second working step sequence can be run multiple times automatically.

5. Weighing apparatus (1) according to one of the preceding claims, **characterized in that**, furthermore, the weighing apparatus (1) has at least one movable guide element (6, 6') which can be moved between a projecting position (Pv), in which the guide element (6, 6') adjoins the conveying region (F), in particular, at least in sections or protrudes at least in sections into the conveying region (F), and a recessed position (Pz), in which the guide element (6, 6') is spaced apart, in particular, from the conveying region (F), and preferably in that the guide element (6, 6') is arranged in such a way that the product (3) is guided along the conveying region (F) past the guide element (6, 6').

6. Weighing apparatus (1) according to Claim 5, **characterized in that** the control device (5) is configured in such a way that the guide element (6, 6') is arranged in the projecting position (Pv) during operation of the conveying device (4) in the direction from the start position (P_{Start}) to the target position (P_{Ziel}), and/or is arranged in the recessed position (P_{Z}) during operation of the conveying device (4) in the direction from the target position (P_{Ziel}) to the start position (P_{Start}).

7. Weighing apparatus (1) according to one of the preceding claims, **characterized in that** the conveying device (4) is a belt conveyor or a roller conveyor.

8. Weighing apparatus (1) according to one of the preceding claims, **characterized in that**, furthermore, the weighing apparatus (1) has a label application device (7) which has, in particular, a printer (8), the conveying region (F) from the start position (P_{Start}) to the target position (P_{Ziel}) leading past or ending at the label application device (7).

9. Method for weighing a product (3), in particular with use of a weighing apparatus (1) according to one of the preceding claims, in the case of which method the following steps are carried out one after another in the indicated sequence:
a) placing of a product (3) on a conveying device (4) in a start position (P_{Start}),
b) operating of the conveying device (4), with the result that the product (3) is conveyed along a conveying region (F) in the direction from the start position (P_{Start}) to a target position (P_{Ziel}),
c) weighing of the product (3) when the product (3) is situated in a weighing section (Aw) above a scale (2), the weighing section (Aw) lying on the conveying region (F) between the start position (P_{Start}) and the target position (P_{Ziel}),
d) operating of the conveying device (4), with the result that the product (3) is conveyed in the direction from the target position (P_{Ziel}) to the start position (P_{Start}),
e) stopping of the conveying device (4) when the product (3) is no longer situated in the weighing section (A_{W}).

10. Method according to Claim 9, **characterized in that** the conveying device (4) is stopped, in particular automatically, in order to weigh the product (3).

11. Method according to Claim 9, **characterized in that** the conveying device (4) is operated further during the weighing of the product (3).

12. Method according to Claim 10 or 11, **characterized in that** the step sequence from steps b) to e) is run multiple times one after another, in particular automatically, and preferably **in that** a mean value is in each case formed from the measured values which are determined in step c) and have been determined during weighing of the product (3) in the stopped state of the conveying device (4), and the measured values which are determined in step c) and have been determined during weighing of the product (3) during the operation of the conveying device (4).

13. Method according to Claim 12, **characterized in that** the mean value of the measured values which have been determined during weighing of the product (3) in the stopped state of the conveying device (4) is compared with the mean value of the measured values which have been determined during weighing of the product (3) during the operation of the conveying device (4).

14. Method according to one of Claims 9 to 13, **characterized in that**, in step b), a movable guide element (6, 6') in a projecting position (Pv) adjoins the conveying region (F) or protrudes at least in sections into the conveying region (F) in such a way that a product (3) which is guided past the guide element (6, 6') on the conveying device (4) comes into contact with the guide element (6, 6') and/or is oriented by the guide element (6, 6'), and preferably **in that**, in step d), the movable guide element (6, 6') lies in a recessed position (Pz) outside the conveying region (F) in such a way that a product (3) which is guided past the guide element (6, 6') on the conveying device (4) does not come into contact with the guide element (6, 6').

15. Method according to Claim 14, **characterized in that** the movable guide element (6, 6') is moved automatically into the projecting position (P_{V}) in or before step b), and/or is moved automatically into the recessed position (Pz) in or before step d) .

## Revendications

1. Dispositif de pesage (1), en particulier dispositif d'affichage de prix ou balance de contrôle, comprenant
- une balance (2) servant à peser un produit (3) dans une section de pesage (A_{W}),
- un dispositif convoyeur (4) servant à transporter le produit (3) le long d'une zone de convoyage (F) d'une position de départ (Pstart) à une position cible (P_{Ziel}) en passant par la section de pesage (A_{W}),
**caractérisé en ce que** le dispositif de pesage (1) présente en outre un dispositif de commande (5) qui est configuré de telle sorte que le dispositif convoyeur (4), pendant son fonctionnement avec le produit (3) en place, est arrêté automatiquement dans une direction de la position de départ (Pstart) à la position cible (P_{Ziel}) et fonctionne ensuite automatiquement dans une direction de la position cible (P_{Ziel}) à la position de départ (P_{Start}) jusqu'à ce que le produit (3) ait quitté la section de pesage (A_{W}).

2. Dispositif de pesage (1) selon la revendication 1, **caractérisé en ce que** le dispositif de commande (5) est configuré de telle sorte que dans une première séquence d'étapes de travail, pendant le fonctionnement du dispositif convoyeur (4) dans la direction de la position de départ (Pstart) à la position cible (P_{Ziel}), une opération de pesage peut être effectuée automatiquement au moyen de la balance (2).

3. Dispositif de pesage (1) selon la revendication 1 ou 2, **caractérisé en ce que** le dispositif de commande (5) est configuré de telle sorte que dans une autre séquence d'étapes de travail qui suit ou précède la première séquence d'étapes de travail, à l'issue du fonctionnement du dispositif convoyeur (4) dans la direction de la position de départ (Pstart) à la position cible (P_{Ziel}), à l'état arrêté du dispositif convoyeur (4), une opération de pesage peut être effectuée automatiquement au moyen de la balance (2), dans lequel en particulier le dispositif convoyeur (4) peut ensuite fonctionner automatiquement dans la direction de la position cible (P_{Ziel}) à la position de départ (Pstart) .

4. Dispositif de pesage (1) selon la revendication 2 ou 3, **caractérisé en ce que** le dispositif de commande (5) est configuré de telle sorte que la première séquence d'étapes de travail et/ou la deuxième séquence d'étapes de travail peut être parcourue automatiquement à plusieurs reprises.

5. Dispositif de pesage (1) selon l'une quelconque des revendications précédentes, **caractérisé en ce que** le dispositif de pesage (1) présente en outre au moins un élément de guidage mobile (6, 6') qui peut être déplacé entre une position en saillie (P_{V}) dans laquelle l'élément de guidage (6, 6') est adjacent en particulier au moins par endroits à la zone de convoyage (F) ou fait saillie au moins par endroits dans la zone de convoyage (F) et une position en retrait (Pz) dans laquelle l'élément de guidage (6, 6') est espacé en particulier de la zone de convoyage (F), de préférence **en ce que** l'élément de guidage (6, 6') est disposé de telle sorte que le produit (3) est amené à passer le long de la zone de convoyage (F) devant l'élément de guidage (6, 6').

6. Dispositif de pesage (1) selon la revendication 5, **caractérisé en ce que** le dispositif de commande (5) est configuré de telle sorte que l'élément de guidage (6, 6') lors du fonctionnement du dispositif convoyeur (4) dans la direction de la position de départ (Pstart) à la position cible (P_{Ziel}) est disposé dans la position en saillie (P_{V}) et/ou lors du fonctionnement du dispositif convoyeur (4) dans la direction de la position cible (P_{Ziel}) à la position de départ (P_{Start}) est disposé dans la position en retrait (P_{Z}).

7. Dispositif de pesage (1) selon l'une quelconque des revendications précédentes, **caractérisé en ce que** le dispositif convoyeur (4) est un convoyeur à bande ou un convoyeur à rouleaux.

8. Dispositif de pesage (1) selon l'une quelconque des revendications précédentes, **caractérisé en ce que** le dispositif de pesage (1) présente en outre un dispositif d'application d'étiquette (7) qui présente en particulier une imprimante (8), la zone de convoyage (F) allant de la position de départ (Pstart) à la position cible (P_{Ziel}) en passant devant ou en se terminant au dispositif d'application d'étiquette (7).

9. Procédé de pesage d'un produit (3), en particulier en utilisant un dispositif de pesage (1) selon l'une quelconque des revendications précédentes, dans lequel successivement dans l'ordre indiqué, les étapes suivantes sont exécutées, consistant à :
a) placer un produit (3) sur un dispositif convoyeur (4) dans une position de départ (Pstart),
b) faire fonctionner le dispositif convoyeur (4) de sorte que le produit (3) soit convoyé dans la direction de la position de départ (Pstart) à une position cible (P_{Ziel}) le long d'une zone de convoyage (F),
c) peser le produit (3) lorsque le produit (3) se trouve dans une section de pesage (Aw) au-dessus d'une balance (2), la section de pesage (Aw) se trouvant sur la zone de convoyage (F) entre la position de départ (Pstart) et la position cible (P_{Ziel}),
d) faire fonctionner le dispositif convoyeur (4) de sorte que le produit (3) soit convoyé dans la direction de la position cible (P_{Ziel}) à la position de départ (P_{Start}),
e) arrêter le dispositif convoyeur (4) lorsque le produit (3) ne se trouve plus dans la section de pesage (Aw) .

10. Procédé selon la revendication 9, **caractérisé en ce que** le dispositif convoyeur (4) est arrêté, en particulier automatiquement, pour peser le produit (3).

11. Procédé selon la revendication 9, **caractérisé en ce que** le dispositif convoyeur (4) continue de fonctionner pendant le pesage du produit (3).

12. Procédé selon la revendication 10 ou 11, **caractérisé en ce que** la suite d'étapes composée des étapes b) à e) est parcourue successivement à plusieurs reprises, en particulier automatiquement, de préférence en ce que respectivement une moyenne est formée à partir des valeurs de mesure établies à l'étape c), qui ont été établies lors du pesage du produit (3) à l'état arrêté du dispositif convoyeur (4), et à partir des valeurs de mesure établies à l'étape c), qui ont été établies lors du pesage du produit (3) pendant le fonctionnement du dispositif convoyeur (4).

13. Procédé selon la revendication 12, **caractérisé en ce que** la moyenne des valeurs de mesure qui ont été établies lors du pesage du produit (3) à l'état arrêté du dispositif convoyeur (4) est comparée avec la moyenne des valeurs de mesure qui ont été établies lors du pesage du produit (3) pendant le fonctionnement du dispositif convoyeur (4).

14. Procédé selon l'une quelconque des revendications 9 à 13, **caractérisé en ce qu'**à l'étape b), un élément de guidage mobile (6, 6') dans une position en saillie (P_{V}) est adjacent à la zone de convoyage (F) ou fait saillie dans la zone de convoyage (F) au moins par endroits de telle sorte qu'un produit (3) amené à passer sur le dispositif convoyeur (4) devant l'élément de guidage (6, 6') entre en contact avec l'élément de guidage (6, 6') et/ou est aligné par l'élément de guidage (6, 6'), de préférence **en ce qu'**à l'étape d), l'élément de guidage mobile (6, 6') se trouve dans une position en retrait (Pz) en dehors de la zone de convoyage (F) de telle sorte qu'un produit (3) sur le dispositif convoyeur (4) amené à passer devant l'élément de guidage (6, 6') n'entre pas en contact avec l'élément de guidage (6, 6').

15. Procédé selon la revendication 14, **caractérisé en ce que** l'élément de guidage mobile (6, 6') est à ou avant l'étape b) déplacé automatiquement vers la position en saillie (Pv) et/ou est à ou avant l'étape d) déplacé automatiquement vers la position en retrait (P_{Z}).
